# FASCICULE DE BREVET EUROPEEN

(11) **EP 2 727 414 B1**
(45) Date de publication et mention de la délivrance du brevet: **15.11.2017**
(21) Numéro de dépôt: 12738530.0
(22) Date de dépôt: 26.06.2012
(51) Int. Cl.: H04W 48/18

(54) **D'OBTENTION PAR UN TERMINAL D'UNE INFORMATION RELATIVE À UN ACCES À UN SERVICE**
ERLANGEN VON DIENSTZUGANGSINFORMATIONEN DURCH EIN ENDGERÄT
OBTAINING BY A TERMINAL INFORMATION RELATING TO ACCESS TO A SERVICE

(30) Priorité: 30.06.2011 FR 1155878
(43) Date de publication de la demande: 07.05.2014
(73) Titulaire: Orange, 75015 Paris (FR)
(72) Inventeur: BERTRAND, Gilles, F-92130 Issy Les Moulineaux (FR); FIEAU, Frédéric, F-22700 Perros Guirec (FR); FROMENTOUX, Gaël, F-22560 Pleumeur Bodou (FR); LE GRAND, Olivier, F-22420 Plouaret (FR)
(86) Numéro de dépôt international: PCT/FR2012/051469
(87) Numéro de publication internationale: WO 2013/001230

(56) Documents cités:
- WO-A2-2008/049132
- US-A1- 2005 286 478
- US-A1- 2007 141 986
- US-A1- 2009 234 950
- HUAWEI: "Discussion about ANDSF", 3GPP DRAFT; S2-083355, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Prague; 20080502, 2 mai 2008 (2008-05-02), XP050265579,
- DAS TELCORDIA TECHNOLOGIES G BAJKO NOKIA S: "DHCPv4 and DHCPv6 Options for Access Network Discovery and Selection Function (ANDSF) Discovery; rfc6153.txt", DHCPV4 AND DHCPV6 OPTIONS FOR ACCESS NETWORK DISCOVERY AND SELECTION FUNCTION (ANDSF) DISCOVERY; RFC6153.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 mars 2011 (2011-03-01), pages 1-7, XP015075896,

## Description

L'invention concerne une technique d'obtention par un terminal d'informations relatives à un environnement radio. Plus précisément, une information relative à un accès à un service est obtenue.

L'invention se situe dans le domaine des télécommunications et plus particulièrement celui de l'accès à un service.

On se place par la suite dans le cas particulier d'un service de distribution de contenus, destiné à distribuer des contenus à la demande CoD, pour « Content on Demand ». L'accès à ce service s'effectue par l'intermédiaire d'un réseau d'accès. On considère qu'un terminal est apte à accéder à deux réseaux d'accès différents, par exemple deux réseaux sans fil. Un réseau de distribution de contenus est associé à chacun des réseaux d'accès. Lorsque le terminal transmet par l'intermédiaire d'un des deux réseaux d'accès une requête d'accès à un contenu, cette dernière est traitée par le réseau de distribution de contenus associé au réseau d'accès ayant acheminé la requête. Cette association entre un réseau d'accès et un réseau de distribution de contenus est en règle générale fixe. Toutefois, le réseau de distribution de contenus traitant la requête peut ne pas être en mesure de traiter la requête.

On connaît du document US2005/0010653 un procédé de redirection dans lequel la requête d'accès à un contenu est acheminée au niveau applicatif vers des noeuds d'attachement de service de distribution de contenus en fonction de mesures de charge des serveurs, de caractéristiques de chemins dans le réseau, de politiques réseau,....

US2009/0234950 divulgue la découverte des services utilisant un dispositif de découverte. Toutefois, ce procédé est complexe à mettre en oeuvre dans un parc existant de terminaux et en l'absence de standardisation de celui-ci. Cette solution est utilisable spécifiquement dans des réseaux de distribution de contenus mettant en oeuvre ce procédé de redirection. Son utilisation dans tout autre réseau de distribution de contenus ne permet pas d'accéder au contenu recherché.

Un des buts de l'invention est de remédier à des insuffisances/inconvénients de l'état de la technique et/ou d'y apporter des améliorations. L'invention est définit par l'objet des revendications indépendantes. L'invention trouve ainsi une application avantageuse dans le cas d'un terminal permettant des accès à différents réseaux sans fil.

Les évolutions de la norme UMTS, pour « Universal Mobile Terrestrial Service », prévoient notamment une fonction de découverte d'un environnement radio ANDSF, pour « Access Network Discovery and Selection Function », permettant à un terminal d'obtenir des informations relatives à son environnement radio sous forme d'une liste, notamment de points d'accès disponibles, 3GPP ou non 3GPP. Cette liste permet notamment au terminal de sélectionner ensuite un point d'accès auquel il va se connecter. Les points d'accès non 3GPP sont des points d'accès non-conformes à la norme UMTS, par exemple des points d'accès WIFI ®, WIMAX ®... Cette fonction ANDSF du réseau est apte à fournir une liste de points d'accès disponibles en fonction d'une localisation du terminal. Elle est par ailleurs spécifiée dans les normes 3GPP TS 24.302, intitulée « Access to the Evolved Packet Core (EPC) via non-3GPP Access Networks; Stage 3 », et 3GPP TS 24.312, intitulée «Access Network Discovery and Selection Function (ANDSF) Management Object (MO) ».

Les points d'accès de la liste sont situés dans un voisinage du terminal. Plus précisément, il s'agit de points d'accès dont la couverture radio comprend la localisation du terminal. Un point d'accès est connecté à un réseau d'accès, c'est-à-dire qu'il propose une connectivité à des terminaux qui accèdent au réseau par son intermédiaire. Le point d'accès est en état de fonctionnement et a des ressources disponibles. L'information relative à un accès à un service transmise au terminal grâce au procédé d'obtention permet d'indiquer à celui-ci s'il est possible d'accéder au service recherché par l'intermédiaire du point d'accès.

L'invention tire son origine d'un problème identifié en association avec un service de distribution de contenus. Toutefois, la solution proposée est applicable à tout type de service et permet ainsi au terminal de sélectionner un point d'accès d'un réseau d'accès permettant d'accéder au service recherché.

Le procédé d'obtention permet ainsi de rediriger le terminal vers un point d'accès adapté pour cet accès au service. Pour le service de distribution de contenus, la redirection peut être mise en oeuvre sans modification du codage des identifiants de contenus.

De plus, le terminal obtient ainsi des informations adaptées à sa localisation courante. Par ailleurs, on économise les ressources matérielles et processeur du terminal, puisqu'on évite au terminal d'accéder à un réseau d'accès par l'intermédiaire duquel il n'est pas possible d'accéder au service recherché.

L'information relative à un accès au service peut être obtenue directement par le dispositif de découverte auprès du fournisseur de service ou bien indirectement par l'intermédiaire d'une entité de médiation, chargée d'obtenir cette information.

La liste est ordonnée et permet de fournir ainsi implicitement un ordre entre les différents points d'accès. Les entités du réseau, et ainsi l'opérateur du réseau, peuvent influencer la sélection faite par le terminal. Le procédé d'obtention comprend en outre une étape de détermination d'une liste de réseaux d'accès permettant d'accéder au service, ladite étape de détermination étant mise en oeuvre préalablement à l'étape de réception.

Le dispositif de découverte peut ainsi disposer d'une information au niveau réseau d'accès à partir de laquelle il peut constituer une première liste de points d'accès avant enrichissement.

Selon une caractéristique particulière, la requête transmise par le terminal comprend une information relative au service.

Ceci permet de limiter la transmission des informations relatives à un accès au service recherché. Le service étant un service de distribution de contenus, le critère appartient au groupe comprenant un profil d'un utilisateur du terminal pour le service, un taux de charge d'un réseau de distribution de contenus accessible par l'intermédiaire d'un réseau d'accès, une occurrence d'un problème sur le réseau de distribution de contenus.

Dans ce mode de réalisation, le serveur de découverte peut ainsi prendre en compte différents critères, tels que des contraintes au niveau opérateur. L'association entre un réseau d'accès et un réseau de distribution de contenus est en règle générale fixe. Un même réseau de distribution de contenus peut toutefois être associé à différents réseaux d'accès. Lorsque le réseau d'accès est sélectionné, le réseau de distribution de contenus associé l'est également. Le procédé d'obtention permet ainsi d'introduire une flexibilité pour accéder aux réseaux de distribution de contenus. On oriente ainsi le terminal vers un point d'accès qui permet d'accéder au réseau de distribution de contenus le plus adapté.

Selon encore une autre caractéristique particulière, le service étant un service de distribution de contenus, une pluralité de réseaux de distribution de contenus étant accessible par l'intermédiaire du point d'accès, le procédé d'obtention comprend en outre :
- une étape de réception en provenance du terminal d'un identifiant d'un contenu ;
- une étape de sélection d'un réseau de distribution de ladite pluralité en fonction de l'identifiant de contenu et de redirection du terminal vers le réseau de distribution sélectionné.

La sélection est ainsi effectuée en fonction du contenu recherché et permet d'augmenter la qualité de service perçue par l'utilisateur du terminal.

Selon encore une autre caractéristique particulière, le procédé d'obtention comprend préalablement à l'étape de sélection, une vérification auprès d'une entité authentifiante du réseau d'accès que le terminal est authentifié.

Ceci permet de garantir que le terminal est bien autorisé à accéder au service.

Selon encore une autre caractéristique particulière, le service étant un service de distribution de contenus, le procédé d'obtention comprend en outre :
- une étape de réception d'une information contextuelle relative à un réseau de distribution de contenus ;
- une étape de mise à jour de la liste ordonnée en fonction de l'information contextuelle ;
- une étape d'envoi de la liste ordonnée mise à jour au terminal.

L'information contextuelle peut être par exemple une information relative à un problème affectant la distribution d'un contenu à un autre terminal, une information relative à la charge d'un réseau de distribution, une évolution d'une politique de l'opérateur du réseau de distribution de contenus, l'évolution d'un paramètre lié au terminal,...

La liste ordonnée mise à jour est transmise spontanément par le réseau au terminal afin que celui-ci puisse accéder au service de distribution de contenus à partir d'un autre point d'accès. La qualité de service perçue par l'utilisateur du terminal est améliorée.

Selon un deuxième aspect, l'invention concerne un dispositif de découverte d'un environnement radio, agencé pour transmettre à un terminal des informations relatives à un environnement radio. Le dispositif comprend les moyens suivants :
- des moyens de réception d'une requête de découverte d'un environnement radio en provenance du terminal ;
- des moyens de détermination d'une liste comprenant une pluralité de points d'accès, appartenant respectivement à un réseau d'accès et prévus pour fournir une couverture radio d'une localisation courante du terminal ;
- des moyens d'obtention d'une information relative à un accès à un service par l'intermédiaire dudit point d'accès de la liste;
- des moyens d'enrichissement de la liste par l'information obtenue en association avec le point d'accès ;
- des moyens d'envoi de la liste enrichie au terminal,
Le dispositif de découverte comprend en outre - des moyens d'ordonnancement de la liste enrichie en fonction d'au moins un critère relatif au service, la liste ordonnée étant envoyée terminal,

Selon un troisième aspect, l'invention concerne un système d'obtention d'informations relatives à un environnement radio comprenant un dispositif de découverte tel que décrit précédemment et une entité de médiation, cette entité comprenant :
- des moyens d'obtention d'informations relatives à un service à partir d'entités mettant en oeuvre le service ;
- des moyens de communication, agencés pour fournir au dispositif de découverte l'information relative à un accès au service par l'intermédiaire d'un point d'accès.

L'invention sera mieux comprise à l'aide de la description suivante de modes de réalisation particuliers du procédé de l'invention, en référence aux dessins annexés sur lesquels :
- la figure 1 représente un terminal dans son environnement selon un mode particulier de réalisation de l'invention ;
- la figure 2 représente un synoptique des échanges entre les différentes entités mettant en oeuvre le procédé d'obtention selon des première et deuxième phases d'un mode particulier de réalisation de l'invention ;
- la figure 3 représente un synoptique des échanges entre les différentes entités mettant en oeuvre le procédé d'obtention selon une troisième phase d'un mode particulier de réalisation de l'invention ;
- la figure 4 représente un synoptique des échanges entre les différentes entités mettant en oeuvre le procédé d'obtention selon un mode particulier de réalisation de l'invention ;
- la figure 5 représente un dispositif de découverte selon un mode particulier de réalisation de l'invention ;
- la figure 6 représente une entité de médiation selon un mode particulier de réalisation de l'invention.

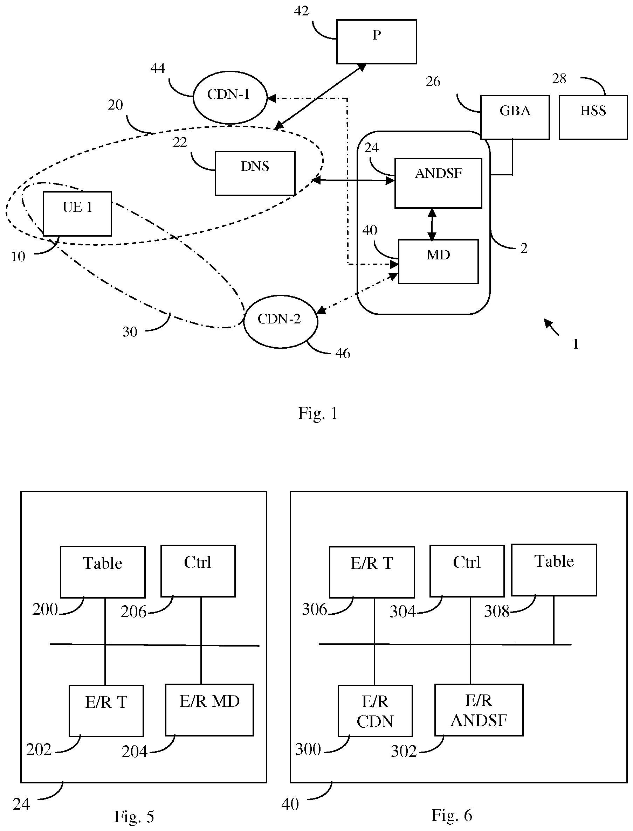

On a représenté schématiquement sur la figure 1 un terminal 10 dans son environnement selon un mode particulier de réalisation. Les différentes entités représentées sur la figure 1 appartiennent à un réseau de communication 1.

Le terminal 10 accède à un premier réseau d'accès 20 par l'intermédiaire d'un point d'accès, non représenté sur la figure 1. Il est bien entendu que le premier réseau d'accès 20 comprend de façon classique les différents dispositifs permettant d'offrir un accès sans fil au terminal 10. Le premier réseau d'accès est par exemple conforme aux spécifications UMTS Un deuxième réseau d'accès 30, non conforme aux spécifications UMTS, est représenté sur la figure 1 : il est dit «non 3GPP ». Il s'agit par exemple d'un point d'accès WIFI ®, WIMAX ®,... Aucune limitation n'est attachée à la technologie de ce deuxième réseau d'accès. Il peut ainsi également être conforme aux spécifications UMTS.

Par souci de simplification, seuls deux réseaux d'accès sont représentés sur la figure 1. Aucune limitation n'est attachée au nombre de réseaux d'accès. L'opérateur du deuxième réseau d'accès 30 peut être opérateur du premier réseau 20 d'accès. Les opérateurs de ces deux réseaux d'accès peuvent également être différents mais autoriser une itinérance entre les deux réseaux d'accès.

Le premier réseau 20 d'accès comprend également un registre 28 des abonnés du premier réseau ou HSS, pour « Home Subscriber Server » et une entité 26 GBA, pour « Generic Bootstrapping Architecture » ou entité authentifiante, en charge de l'authentification des utilisateurs en relation avec le registre des abonnés 28.

De plus, le premier réseau 20 d'accès comprend un serveur de découverte 24 de l'environnement radio. Ce serveur de découverte 24 met en oeuvre une fonction de découverte d'un environnement radio ANDSF, pour « Access Network Discovery and Selection Function », permettant à un terminal d'obtenir des informations relatives à son environnement radio sous forme d'une liste, notamment de points d'accès disponibles, 3GPP ou non 3GPP, en fonction d'une localisation du terminal. Cette fonction est spécifiée dans les normes 3GPP TS 24.302 et 3GPP TS 24.312. Le serveur de découverte 24 mémorise dans une table 200 une liste de points d'accès 3GPP et non 3GPP et leurs zones de couverture respectives. Les points d'accès administrés par les opérateurs des premier 20 et deuxième réseaux sont enregistrés dans le serveur de découverte 24 en fonction de leur localisation. La table 200 mémorise ainsi pour une zone de localisation donnée, une liste de points d'accès des premier et deuxième réseaux d'accès dont la couverture radio couvre la zone de localisation. Ainsi, en fonction de la localisation du terminal 10, le serveur de découverte 24 est agencé pour fournir une liste de points d'accès dont la couverture radio comprend la localisation du terminal 10 et auxquels le terminal 10 est susceptible d'accéder. La localisation du terminal peut correspondre à une position GPS du terminal lui-même ou bien peut être déterminée au moyen de la localisation du point d'accès par l'intermédiaire duquel il accède au serveur de découverte 24. Le serveur de découverte 24 est prévu pour répondre à des requêtes de découverte d'environnement radio émises par les terminaux abonnés du premier réseau d'accès 20. Il est également apte à initier une transmission d'informations relatives aux réseaux d'accès vers un terminal, cette transmission étant déclenchée à l'initiative du réseau ou bien faisant suite à une communication antérieure avec le terminal. Selon l'invention, la table 200 comprend en outre pour chacun des points d'accès associé à une zone de localisation, une ou plusieurs informations respectivement relatives à un accès à un ou des services. Une information relative à un accès à un service donné permet ainsi d'indiquer au terminal si l'accès au service est possible à partir de ce point d'accès.

Le premier réseau d'accès 20 comprend en outre un serveur 22 de noms de domaine, apte à établir une correspondance entre une adresse dans le réseau de communication 1 et un nom de domaine.

Au premier réseau d'accès 20 est associé un premier réseau 44 de distribution de contenus ou CDN-1, apte à fournir des contenus à des terminaux accédant par l'intermédiaire du premier réseau d'accès 20. Au deuxième réseau d'accès 30 est associé un deuxième réseau 46 de distribution de contenus ou CDN-2, apte à fournir des contenus à des terminaux accédant par l'intermédiaire du deuxième réseau d'accès 30. Aucune limitation n'est attachée au type des contenus fournis par les premier 44 et deuxième 46 réseaux de distribution de contenus. Par ailleurs, dans l'exemple de la figure 1, un seul réseau de distribution de contenus est associé à un réseau d'accès. Il est bien entendu qu'une pluralité de réseaux de distribution de contenus peut être associée à un réseau d'accès. Il est également possible d'avoir plusieurs réseaux d'accès associés à un unique réseau de distribution de contenus.

Toujours sur la figure 1 est représenté un portail 42 d'accès au service de distribution de contenus. Ce portail 42 est apte à recevoir une requête d'accès à un contenu envoyée par un terminal et à rediriger le terminal requérant vers un serveur d'un réseau de distribution de contenus en vue de la fourniture du contenu. Selon l'invention, le terminal est redirigé vers une entité 40 de médiation. Cette entité 40 de médiation est reliée au serveur de découverte 24 ainsi qu'aux premier 42 et deuxième 44 réseaux de distribution de contenus. L'entité de médiation 40 comprend une table 308, mémorisant une association entre un réseau d'accès et un ou plusieurs réseaux de distribution de contenus. L'entité de médiation 40 est notamment apte à obtenir des informations relatives à un accès à un service à partir des réseaux de distribution de contenus, à collecter des informations relatives à la distribution des contenus vers des entités clientes et à coopérer avec le serveur de découverte 24 pour la mise en oeuvre du procédé d'obtention.

Le serveur de découverte 24 et l'entité de médiation 40 forment un système 2 d'obtention d'informations relatives à un environnement radio.

On précise ici que le premier réseau 20 d'accès correspond au réseau nominal du terminal, c'est-à-dire le réseau où un utilisateur du terminal est abonné. Par la suite, le terme terminal correspond aussi bien l'équipement lui-même qu'à l'utilisateur du terminal. Dans ce qui est décrit ultérieurement, le terminal 10 accède au serveur de découverte 24 de son réseau nominal par l'intermédiaire de points d'accès appartenant à ce même réseau. Aucune limitation n'est attachée à un tel accès. Le terminal peut en effet communiquer avec le serveur de découverte 24 de son réseau nominal en accédant par l'intermédiaire du deuxième réseau d'accès, ou encore un autre réseau d'accès, non représenté sur la figure 1.

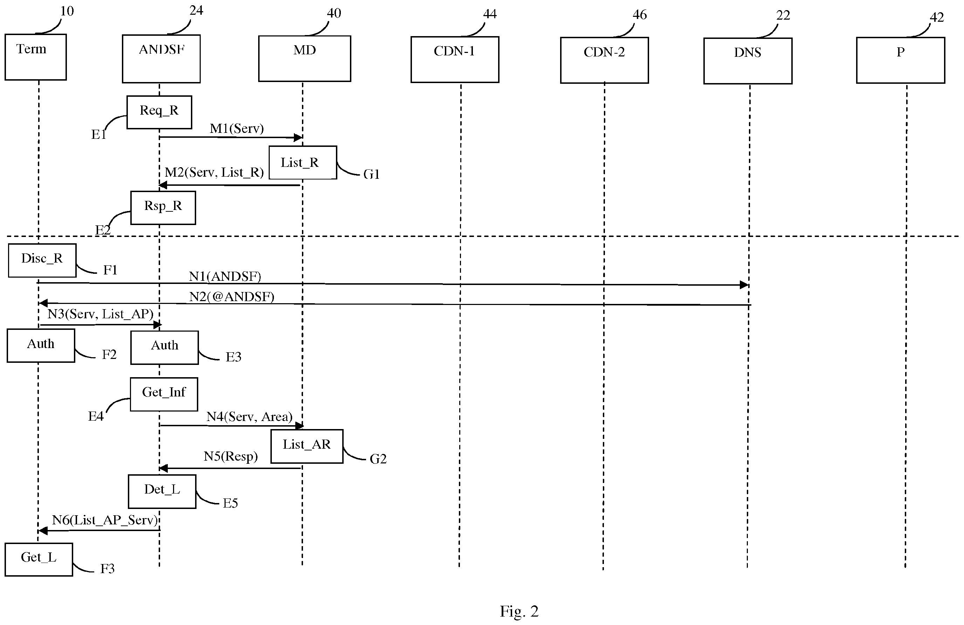

Le procédé d'obtention par le terminal d'informations relatives à un environnement radio va maintenant être décrit en relation avec les figures 2, 3 et 4. Seules les étapes nécessaires à la compréhension de l'invention sont représentées.

Nous allons dans un premier temps décrire en relation avec la figure 2 une première phase du procédé d'obtention dans laquelle le serveur de découverte 24 enrichit la table 200 à l'aide d'informations relatives à un accès à un service. On se place par la suite dans le cas particulier où le service correspond au serveur de distribution de contenus. Toutefois, le procédé d'obtention décrit ultérieurement est aisément transposable à d'autres types de service.

On rappelle ici que la table 200 mémorise pour une zone de localisation une liste de points d'accès 3GPP ou non 3GPP.

Dans une première étape E1, le serveur de découverte 24 transmet une requête M1 à l'entité 40 de médiation afin d'obtenir les informations relatives à un accès au service de distribution de contenus. La requête M1 comprend notamment une information permettant d'identifier le service de distribution de contenus, par exemple un identifiant de service.

Dans une étape G1, l'entité 40 de médiation reçoit la requête M1, détermine une liste de réseaux d'accès permettant d'accéder au service demandé à partir des informations mémorisées dans la table 308 et transmet au serveur de découverte 24 une réponse M2 comprenant la liste de réseaux d'accès déterminée.

Dans une étape E2, le serveur de découverte 24 reçoit la réponse M2 et mémorise dans la table 200 pour chaque point d'accès l'information relative à un accès au service à l'aide de la liste de réseaux d'accès reçue.

Plus précisément, la table 200 mémorise à l'issue de cette étape E2, pour une zone de localisation donnée, une liste de points d'accès et pour chaque point d'accès une information relative à un accès au service à partir de ce point d'accès. On rappelle ici que les points d'accès sont susceptibles d'appartenir à des réseaux d'accès différents. Le serveur de découverte 24 dispose ainsi d'un premier niveau d'information quant à l'accès au service.

Cette étape E2 termine la première phase du procédé d'obtention.

A l'état initial, le terminal 10 est enregistré auprès du premier réseau 20 d'accès.

Une deuxième phase du procédé d'obtention, représentée également à la figure 2, correspond plus précisément aux étapes permettant au terminal 10 d'obtenir une liste de points d'accès correspondant à sa localisation courante.

Dans une étape F1, le terminal 10 transmet une requête N1 à destination du serveur 22 de noms de domaine, afin d'obtenir une adresse dans le réseau de communication 1 du serveur 24 de découverte. Le terminal 10 reçoit en retour une réponse N2 comprenant cette adresse. Par exemple le message N1 est un message « DNS Request » et le message N2 est un message « DNS Response ».

Toujours dans cette étape F1, le terminal 10 transmet une requête N3 de découverte d'un environnement radio à destination du serveur 24 de découverte. Cette requête N3 indique que le terminal 10 souhaite recevoir une liste de points d'accès adaptée à sa localisation courante. Dans un mode de réalisation particulier, la requête N3 est relative à un service donné. Dans l'exemple détaillé ici il s'agit du service de distribution de contenus.

Dans une étape E3, le serveur 24 de découverte reçoit la requête N3 de découverte et coopère avec le registre des abonnés 28 et l'entité 26 GBA pour authentifier l'utilisateur du terminal 10. L'étape F2 correspond à la mise en oeuvre de l'authentification au niveau du terminal 10. A l'issue de ces étapes E3 et F2, un lien sécurisé est établi entre le terminal 10 et le serveur 24 de découverte.

Une fois le lien sécurisé établi, dans une étape E4 d'obtention, le serveur 24 de découverte détermine à partir de la table 200 une liste de points d'accès prévus pour fournir une couverture radio de la localisation courante du terminal 10, ces points d'accès étant aptes a priori à fournir un accès au service recherché. Puis le serveur 24 de découverte transmet un message N4 à l'entité 40 de médiation. Cette étape E4 vise à obtenir pour au moins un des points d'accès de la liste une information relative à un accès au service par l'intermédiaire de ce point d'accès. Ce message N4 indique notamment une zone réseau où se situe le terminal 10. Pour une zone de réseau donnée, les différents réseaux d'accès peuvent être organisés de façon hiérarchique.

Dans une étape G2, l'entité 40 de médiation détermine l'information relative à un accès au service recherché pour ce point d'accès concerné et transmet un message N5 de réponse. Ce dernier comprend l'information déterminée.

Le message N5 de réponse est reçu par le serveur 24 de découverte dans une étape E5. Il est ici souligné que le serveur 24 de découverte peut obtenir les informations associées à tout ou partie de la liste de points d'accès en une seule ou bien plusieurs interrogations de l'entité 40 de médiation. Pour chaque point d'accès, l'information relative à un accès au service est ainsi mise à jour en fonction de la période où le terminal va accéder effectivement au service.

Dans cette étape E5, le serveur 24 de découverte enrichit la liste de points d'accès à l'aide des informations relatives à un accès au service reçus dans le message N5 et transmet au terminal 10 un message N6 de réponse, comprenant cette liste enrichie.

Le message N6 de réponse est reçu par le terminal 10 dans une étape F3.

Ceci termine la deuxième phase d'obtention par le terminal d'une liste de points d'accès enrichie à l'aide des informations relatives à un accès au service recherché.

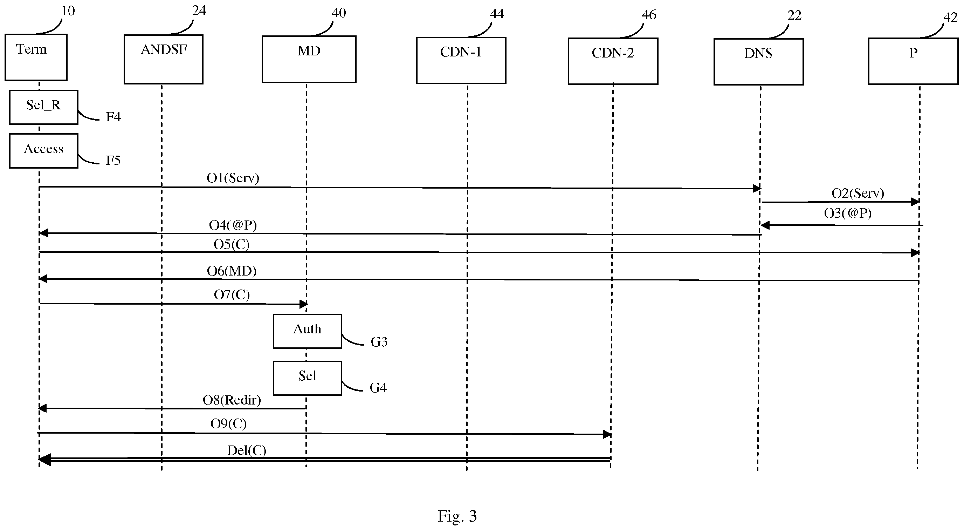

La troisième phase de livraison du contenu va maintenant être décrite en relation avec la figure 3.

On rappelle ici que le terminal 10 a obtenu à l'étape F3 dans le message N6 de réponse une liste de points d'accès enrichie à l'aide des informations relatives à un accès au service.

Dans une étape F4, le terminal 10 sélectionne dans cette liste enrichie un point d'accès particulier, par l'intermédiaire duquel un accès au service de distribution de contenus est possible. Il peut s'agir d'un point d'accès appartenant au premier réseau 20 d'accès, ou bien encore d'un point d'accès appartenant au deuxième réseau 30 d'accès. Dans ce dernier cas, le terminal 10 doit préalablement s'enregistrer auprès du deuxième réseau 30 avant de mettre en oeuvre les étapes suivantes. A titre d'exemple non limitatif, le terminal 10 peut sélectionner le point d'accès situé en première position dans la liste et permettant un accès au service recherché. On se place par la suite dans le cas où le terminal 10 sélectionne un point d'accès du deuxième réseau d'accès 30.

Dans une étape F5, le terminal 10 transmet un message O1 à destination du serveur 22 de noms de domaine, afin d'obtenir une adresse dans le réseau de communication du portail 42 d'accès au service de distribution de contenus. Le serveur 22 de noms de domaine transmet un message 02 à destination du portail 42 et obtient en retour un message 03, comprenant l'adresse recherchée. Cette adresse est retransmise à destination du terminal 10 dans un message 04. Les messages O1 et 02 sont par exemple des messages « DNS Request » et les messages 03 et 04 sont des messages « DNS Response ».

Le terminal 10 transmet ensuite un message O5 de requête d'accès à un contenu à destination du portail 42 d'accès au service de distribution de contenus, le portail étant identifié par son adresse dans le réseau de communication 1. Le message O5 de requête d'accès à un contenu comprend notamment un identifiant du contenu recherché. A titre illustratif, le message O5 est par exemple un message « Http Request ». L'identifiant du contenu est par exemple une adresse universelle du contenu (URL). Cette adresse universelle permet d'accéder au contenu recherché quel que soit le réseau de distribution de contenus.

Selon l'invention, le portail 42 redirige par un message 06 le terminal 10 vers l'entité 40 de médiation. Il est ici souligné que lors de la redirection, l'identifiant de contenu n'est pas obligatoirement le même que celui transmis par le terminal dans le message O5.

Le terminal 10 transmet alors un message 07 de requête d'accès à un contenu à l'entité 40 de médiation. Le message 07 de requête d'accès à un contenu comprend notamment l'identifiant du contenu recherché.

Dans une étape G3, l'entité 40 de médiation reçoit le message 07. L'entité de médiation 40 peut vérifier auprès de la fonction GBA que le terminal 10 est bien authentifié. Cette vérification est optionnelle. Elle permet de vérifier que l'utilisateur du terminal 10 est bien celui qu'il prétend.

Dans une étape G4, l'entité 40 de médiation sélectionne un des réseaux de distribution de contenus en fonction du réseau d'accès par l'intermédiaire duquel le terminal 10 accède et également en fonction du contenu recherché. Dans le cas particulier illustré ici, il s'agit du deuxième réseau de distribution 46.

Optionnellement, l'entité de médiation vérifie si le deuxième réseau de distribution 46 dispose du contenu recherché. A cet effet, dans une étape préalable non représentée sur les figures, l'entité de médiation 40 a obtenu des premier 44 et deuxième 46 réseaux de distribution de contenus des listes de contenus disponibles et a mémorisé ces listes de contenus disponibles en association avec le réseau de distribution de contenus dans une table non représentée. Ainsi, l'entité de médiation 40 dispose d'une table mémorisant pour un contenu et pour chaque réseau de distribution de contenus, un identifiant du contenu. Dans une variante, il est également possible d'obtenir ces informations à partir d'une autre entité du réseau. Dans un mode de réalisation particulier, lorsque le contenu n'est pas disponible sur le réseau de distribution de contenus, l'entité de médiation 40 transmet cette information au serveur de découverte 24, afin que ce dernier puisse transmettre une nouvelle liste de points d'accès au terminal 10.

Cette étape G4 de sélection est particulièrement avantageuse lorsqu'à partir d'un réseau d'accès, il est possible d'accéder à une pluralité de réseaux de distribution de contenus.

A l'issue de cette étape G4, l'entité 40 de médiation transmet un message 08 de redirection du terminal 10 vers un réseau de distribution, par exemple le deuxième réseau 46 de distribution associé au deuxième réseau d'accès 30. Ce message 08 comprend un identifiant du contenu recherché. Dans un mode de réalisation, lors de l'étape G4, l'entité 40 de médiation adapte l'identifiant de contenu en fonction du réseau de distribution sélectionné et transmet dans le message 08 de redirection cet identifiant de contenu adapté. Ainsi, l'adaptation de l'identifiant du contenu réalisée par cette entité du réseau permet de ne pas modifier le terminal lui-même. Ce dernier peut alors accéder indifféremment à des réseaux de distribution de contenus, dans lesquels les identifiants de contenus sont codés de façon différente.

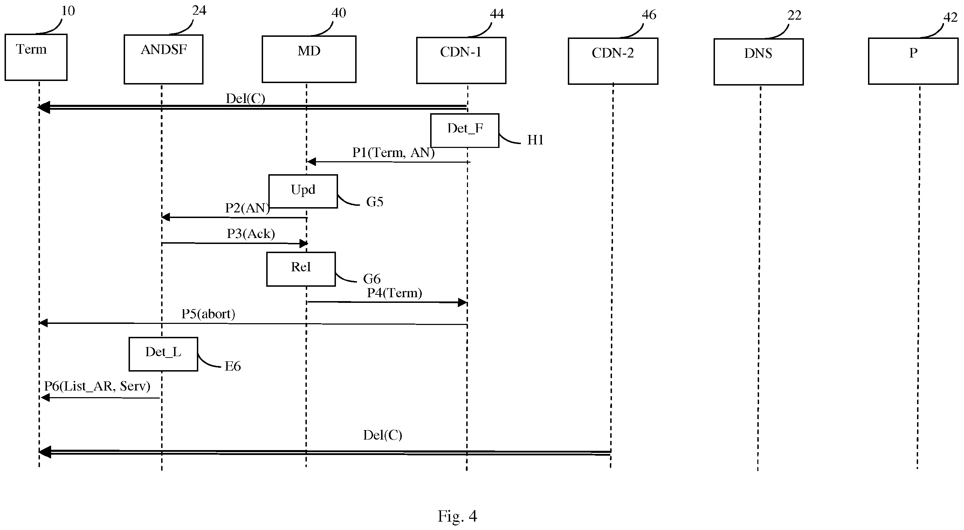

Le terminal 10 obtient auprès du serveur 22 de noms de domaine une adresse dans le réseau de communication d'un serveur d'entrée dans le deuxième réseau 46 de distribution de contenus. Ces échanges ne sont pas représentés sur la figure 4 pour ne pas la surcharger.

Le terminal 10 transmet ensuite au serveur d'entrée dans le deuxième réseau 46 un message 09 requérant la livraison du contenu recherché. Dans le mode de réalisation particulier, le terminal transmet dans le message 09 l'identifiant de contenu adapté au réseau de distribution de contenus, qu'il a reçu dans le message 08 de redirection.

Le deuxième réseau 46 de distribution de contenus livre ensuite le contenu recherché au terminal 10.

La figure 4 représente un cas particulier de livraison d'un contenu au terminal.

Au cours de la livraison du contenu au terminal 10, dans une étape H1, un serveur du premier réseau 44 de distribution de contenus détecte un problème de livraison et en informe l'entité 40 de médiation par un message P1 de notification. Il peut par exemple s'agir d'un problème de perte de paquets constaté dans le premier réseau 44 de distribution. Aucune limitation n'est attachée au type de problème rencontré. Le problème peut être temporaire. Le message P1 de notification comprend notamment un identifiant du terminal 10, un identifiant du réseau d'accès concerné par le problème ou bien encore un identifiant du réseau de distribution de contenus concerné par le problème.

La figure 4 illustre un cas particulier d'un problème survenu lors de la livraison du contenu au terminal. Dans un mode de réalisation particulier, le serveur du premier réseau 44 de distribution de contenus notifie l'entité 40 de médiation de toute modification d'accessibilité à des contenus par son intermédiaire.

Ainsi le message de notification P1 peut comprendre tout type d'information susceptible de modifier les listes de points d'accès au service de distribution de contenus. Cette information est appelée information contextuelle et peut être par exemple une information relative à un problème affectant la distribution d'un contenu à un autre terminal, une information relative à la charge d'un réseau de distribution, une évolution d'une politique de l'opérateur du réseau de distribution de contenus, l'évolution d'un paramètre lié au terminal... Il est ici souligné que cette liste n'est pas exhaustive.

Dans une étape G5, l'entité 40 de médiation obtient une information contextuelle relative à un réseau de distribution de contenus dans un message P1 de notification.

L'entité de médiation 40 identifie le serveur 24 de découverte correspondant au réseau nominal du terminal 10 et informe le serveur de découverte identifié par un message P2 de notification. Ce message P2 de notification comprend une mise à jour en fonction de l'information contextuelle de la liste des réseaux d'accès permettant d'accéder au service demandé. A titre d'exemple non limitatif, lorsqu'il s'agit d'un problème affectant un réseau de distribution de contenus particulier, l'entité de médiation détermine le ou les réseaux d'accès associés à ce réseau de distribution de contenus. L'entité de médiation 40 peut également notifier d'autres serveurs de découverte, le cas échéant.

Dans un mode de réalisation particulier, le serveur 24 de découverte modifie dans la table 200 l'information relative à un accès au service pour les points d'accès du réseau d'accès concerné, afin d'indiquer un état «accès impossible ». Ainsi, lorsque d'autres terminaux vont contacter le serveur 24 de découverte, la liste de points d'accès enrichie n'indique pas les points d'accès du premier réseau 20 d'accès comme permettant d'accéder au service de distribution de contenus. Ceci permet d'orienter les autres terminaux vers d'autres réseaux d'accès et/ou d'autres réseaux de distribution de contenus.

De manière optionnelle, cette modification peut être effectuée pendant une durée prédéterminée, l'information relative à un accès au service par le réseau d'accès concerné repassant à l'état « accès possible » à l'issue de cette durée prédéterminée. Ceci permet ainsi de revenir à un fonctionnement nominal.

Le serveur 24 de découverte acquitte la réception du message P2 de notification par un message P3 d'acquittement.

L'entité 40 de médiation reçoit dans une étape G6 le message P3 d'acquittement et transmet à son tour un message P4 d'acquittement au serveur du premier réseau de distribution de contenus. Lorsqu'il s'agit d'un problème affectant la livraison du contenu au terminal 10, l'entité 40 de médiation demande également à l'aide du message P4 au premier réseau 44 de distribution d'interrompre la livraison du contenu à destination du terminal 10. Les étapes suivantes sont mises en oeuvre dans ce cas particulier.

Le premier réseau 44 de distribution de contenus transmet alors au terminal 10 un message P5 d'interruption de la livraison.

Dans une étape E6, le serveur 24 de découverte détermine une nouvelle liste de points d'accès enrichie pour le terminal 10 et la transmet en mode « push » dans un message P6 à destination du terminal 10. Le message P6 est transmis sans sollicitation préalable du terminal. Ceci permet au terminal d'obtenir une liste de points d'accès enrichie immédiatement. Le terminal peut alors changer de réseau d'accès pour accéder de nouveau au service.

On se place dans l'hypothèse où le terminal 10 sélectionne un point d'accès du deuxième 30 réseau d'accès. Le terminal 10 met de nouveau en oeuvre les étapes décrites en relation avec la figure 4 et obtient la livraison du contenu recherché à partir du deuxième réseau 46 de distributions de contenu. La qualité de service du service de distribution de contenus est ainsi améliorée.

Dans le mode de réalisation décrit précédemment, l'adresse dans le réseau de communication 1 a été obtenue par interrogation du serveur 22 de noms de domaine. Il est également envisageable d'obtenir cette adresse auprès d'un serveur DHCP, pour « Dynamic Host Configuration Protocol ». Elle peut également être configurée dans le terminal 10.

Dans le mode de réalisation décrit précédemment, le terminal 10 transmet dans la requête N3 de découverte une information relative au service recherché. Dans un deuxième mode de réalisation, la requête N3 de découverte transmise par le terminal 10 à l'étape F1 ne précise pas le service recherché. Le serveur 24 de découverte transmet alors une liste de points d'accès indiquant pour chaque point d'accès le ou les services auxquels il est possible d'accéder par l'intermédiaire du point d'accès. Le terminal 10 sélectionne ensuite dans cette liste un point d'accès en fonction du service recherché.

Dans le mode de réalisation décrit précédemment, le serveur de découverte 24 enrichit la liste de points d'accès à l'aide des informations relatives à un accès au service. Dans un troisième mode de réalisation, lors de l'étape E5, le serveur 24 de découverte ordonne la liste de points d'accès enrichie en fonction d'au moins un critère relatif au service et transmet la liste de points d'accès enrichie et ordonnée au terminal 10.

Le critère relatif au service peut être par exemple un profil d'un utilisateur du terminal pour le service. Ce profil de l'utilisateur est obtenu par le serveur 24 de découverte lors de l'étape E3 d'authentification et est transmis à l'entité 40 de médiation dans le message N4. En fonction d'une politique de l'opérateur de réseau, celui-ci peut favoriser l'accès au contenu par l'intermédiaire d'un réseau d'accès choisi en fonction du profil de l'utilisateur. A titre d'exemple illustratif, un opérateur de réseau peut proposer deux réseaux d'accès différents, un premier UMTS et un deuxième Wifi ®. Si l'utilisateur a souscrit à une qualité de service élevée pour la distribution de contenus, il est alors possible de favoriser son accès aux contenus par le réseau d'accès UMTS. Dans le cas contraire, l'accès aux contenus se fait par l'intermédiaire du réseau Wifi ®.

Le critère relatif au service peut être un taux de charge du réseau de distribution de contenus, fournissant le service. L'entité 40 de médiation peut ainsi notifier le serveur 24 de découverte d'un problème de charge sur un des réseaux de distribution de contenus. Ainsi, les points d'accès permettant un accès vers ce réseau de distribution sont placés de préférence en fin de la liste ordonnée afin de décharger le réseau de distribution de contenus.

Le critère relatif au service peut être une occurrence d'un problème sur le réseau de distribution de contenus comme décrit précédemment en relation avec la figure 5.

Dans le mode de réalisation décrit précédemment, le serveur de découverte 24 construit la liste de points d'accès et obtient les informations relatives à un accès au service de l'entité de médiation. Il est également possible de prévoir que le serveur de découverte 24 transmette la liste de points d'accès à l'entité de médiation 40 et que cette dernière enrichisse la liste de points d'accès à l'aide des informations relatives à un accès au service puis retransmette la liste enrichie au serveur de découverte 24.

Un dispositif 24 de découverte d'un environnement radio va maintenant être décrit en relation avec la figure 5. Il est agencé pour transmettre à un terminal des informations relatives à un environnement radio.

Un tel dispositif comprend :
- les moyens 200 de mémorisation précédemment décrits, agencés pour mémoriser pour une zone de localisation, une liste de points d'accès et pour chaque point d'accès une information relative à un accès à un service ;
- un module 202 de communication avec le terminal, agencé pour recevoir une requête de découverte de réseaux d'accès en provenance du terminal et pour transmettre une liste de points d'accès à ce dernier en réponse à la requête ;
- un module 206 de détermination d'une liste comprenant au moins un point d'accès, ledit point d'accès étant prévu pour fournir une couverture radio d'une localisation courante du terminal ;
- un module 204 de communication avec une entité de médiation 40.

Le module 204 de communication est notamment agencé pour obtenir de l'entité de médiation une information relative à un accès à un service par l'intermédiaire d'un point d'accès.

Le module 206 est également agencé pour enrichir une liste déterminée de points d'accès à l'aide de l'information obtenue par le module 204 de communication pour un point d'accès de la liste. Le module 202 est alors agencé pour transmettre la liste enrichie au terminal.

Dans un mode de réalisation particulier, le module 206 est en outre agencé pour ordonner la liste enrichie en fonction d'au moins un critère relatif au service. Le module 202 envoie alors la liste ordonnée au terminal,

Une entité de médiation 40 va maintenant être décrite en relation avec la figure 6. L'entité de médiation 40 comprend :
- un module 300 de communication avec des entités mettant en oeuvre un service ;
- un module 302 de communication avec un dispositif de découverte 24 ;
- un module 306 de communication avec des terminaux ;
- un module 304 de contrôle.

Le module 300 est notamment agencé pour obtenir des informations relatives au service à partir des entités mettant en oeuvre le service. Pour le service de distribution de contenus, les entités mettant en oeuvre le service appartiennent aux réseaux de distribution de contenus. Le module 300 peut notamment recevoir des informations contextuelles relatives à un réseau de distribution de contenus, par exemple des notifications relatives à des problèmes rencontrés lors de la distribution de contenus.

A partir des informations obtenues par le module 300, le module 304 de contrôle détermine une information relative à un accès au service pour un réseau d'accès, et ainsi pour un point d'accès du réseau d'accès.

Le module 302 de communication est notamment agencé pour :
- recevoir une requête M1 émise par le dispositif de découverte 24 afin d'obtenir les informations relatives à un accès au service et pour émettre une réponse M2 comprenant une liste de réseaux d'accès permettant d'accéder au service ;
- recevoir une requête N4 émise par le dispositif de découverte afin d'obtenir une information relative à un accès au service par l'intermédiaire d'un point d'accès donné et pour émettre une réponse N5 comprenant l'information demandée ;
- émettre un message P2 de notification informant d'un problème sur un réseau d'accès.

Le module 306 de communication est notamment agencé pour recevoir une requête 07 d'accès à un contenu en provenance d'un terminal et pour émettre un message 08 de redirection vers un réseau de distribution de contenus sélectionné par le module 304.

L'entité de médiation 40 comprend les moyens de mémorisation 308, décrits précédemment, agencés pour mémoriser pour une association entre un réseau d'accès et un ou plusieurs réseaux de distribution de contenus.

Dans la variante décrite précédemment, l'entité de médiation 40 comprend en outre une table mémorisant pour un contenu et pour chaque réseau de distribution de contenus, un identifiant du contenu. Dans cette variante, le module 304 est alors agencé pour sélectionner un réseau de distribution de contenus en fonction du contenu recherché par le terminal.

Les modules 204, 206 du dispositif de découverte de réseau sont agencés pour mettre en oeuvre celles des étapes du procédé d'obtention par un terminal d'informations relatives à un environnement radio précédemment décrit exécutées par le dispositif de découverte. Il s'agit de préférence de modules logiciels comprenant des instructions logicielles pour faire exécuter celles des étapes du procédé d'obtention précédemment décrit, mises en oeuvre par un dispositif de découverte. L'invention concerne donc aussi :
- un programme pour dispositif de découverte, comprenant des instructions de programme destinées à commander l'exécution de celles des étapes du procédé d'obtention précédemment décrit qui sont exécutées par ledit dispositif, lorsque ledit programme est exécuté par un processeur de celui-ci ;
- un support d'enregistrement lisible par un dispositif de découverte sur lequel est enregistré le programme pour dispositif de découverte.

Le module 304 de l'entité de médiation est agencé pour mettre en oeuvre celles des étapes du procédé d'obtention par un terminal d'informations relatives à un environnement radio précédemment décrit exécutées par l'entité de médiation. Il s'agit de préférence de modules logiciels comprenant des instructions logicielles pour faire exécuter celles des étapes du procédé d'obtention précédemment décrit, mises en oeuvre par une entité de médiation.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système 2 d'obtention d'informations relatives à un environnement radio comprenant un dispositif de découverte et une entité de médiation tels que décrits précédemment.

Le dispositif de découverte 24 peut également intégrer les fonctions précédemment décrites de l'entité de médiation 40 pour former le système 2 d'obtention d'informations relatives à un environnement radio.

## Revendications

1. Procédé d'obtention par un terminal (10) d'informations relatives à un environnement radio, ledit procédé comprenant les étapes suivantes :
- une étape (E3) de réception par un dispositif de découverte (24) d'une requête de découverte d'un environnement radio en provenance du terminal ;
- une étape (E4) de détermination par le dispositif de découverte d'une liste comprenant une pluralité de points d'accès, appartenant respectivement à un réseau d'accès et étant prévu pour fournir une couverture radio d'une localisation courante du terminal ;
- une étape (E4) d'obtention d'une information relative à un accès à un service de distribution de contenus par l'intermédiaire des points d'accès de la liste ;
- une étape (E5) d'enrichissement de la liste par l'information obtenue en association avec le point d'accès ;
- une étape (E5) d'ordonnancement de la liste enrichie en fonction d'au moins un critère relatif au service, ledit critère appartenant au groupe comprenant un profil d'un utilisateur du terminal pour le service, un taux de charge d'un réseau de distribution de contenus accessible par l'intermédiaire d'un réseau d'accès, une occurrence d'un problème sur le réseau de distribution de contenus ;
- une étape (E5) d'envoi par le dispositif de découverte de la liste ordonnée au terminal.

2. Procédé d'obtention selon la revendication 1, comprenant en outre une étape (G1) de détermination d'une liste de réseaux d'accès permettant d'accéder au service, ladite étape de détermination étant mise en oeuvre préalablement à l'étape de réception.

3. Procédé d'obtention selon la revendication 1, dans lequel la requête transmise par le terminal comprend une information relative au service.

4. Procédé d'obtention selon la revendication 1, dans lequel le service étant un service de distribution de contenus, une pluralité de réseaux de distribution de contenus étant accessible par l'intermédiaire du point d'accès, ledit procédé comprend en outre :
- une étape (G3) de réception en provenance du terminal d'un identifiant d'un contenu ;
- une étape (G4) de sélection d'un réseau de distribution de ladite pluralité en fonction de l'identifiant de contenu et de redirection du terminal vers le réseau de distribution sélectionné.

5. Procédé d'obtention selon la revendication 4, comprenant préalablement à l'étape de sélection, une vérification auprès d'une entité authentifiante du réseau d'accès que le terminal est authentifié.

6. Procédé d'obtention selon la revendication 1, dans lequel le service étant un service de distribution de contenus, ledit procédé comprend en outre :
- une étape de réception d'une information contextuelle relative à un réseau de distribution de contenus ;
- une étape de mise à jour de la liste ordonnée en fonction de l'information contextuelle ;
- une étape d'envoi de la liste ordonnée mise à jour au terminal.

7. Dispositif (24) de découverte d'un environnement radio, agencé pour transmettre à un terminal (10) des informations relatives à un environnement radio, ledit dispositif comprenant les moyens suivants :
- des moyens (202) de réception d'une requête de découverte d'un environnement radio en provenance du terminal ;
- des moyens (206) de détermination d'une liste comprenant une pluralité de points d'accès, appartenant respectivement à un réseau d'accès et prévus pour fournir une couverture radio d'une localisation courante du terminal ;
- des moyens (204) d'obtention d'une information relative à un accès à un service de distribution de contenus par l'intermédiaire des points d'accès de la liste;
- des moyens (206) d'enrichissement de la liste par l'information obtenue en association avec le point d'accès ;
- des moyens (206) d'ordonnancement de la liste enrichie en fonction d'au moins un critère relatif au service, ledit critère appartenant au groupe comprenant un profil d'un utilisateur du terminal pour le service, un taux de charge d'un réseau de distribution de contenus accessible par l'intermédiaire d'un réseau d'accès, une occurrence d'un problème sur le réseau de distribution de contenus ;
- des moyens (202) d'envoi de la liste ordonnée au terminal.

8. Système d'obtention d'informations relatives à un environnement radio comprenant un dispositif de découverte selon la revendication 7 et une entité de médiation, ladite entité comprenant :
- des moyens (300) d'obtention d'informations relatives à un service à partir d'entités mettant en oeuvre le service ;
- des moyens (302) de communication, agencés pour fournir au dispositif de découverte l'information relative à un accès au service par l'intermédiaire d'un point d'accès.

9. Terminal, agencé pour obtenir des informations relatives à un environnement radio, ledit terminal comprenant :
- des moyens d'envoi à destination d'un dispositif de découverte d'une requête de découverte dudit environnement radio ;
- des moyens de réception depuis ledit dispositif de découverte, d'une liste comprenant une pluralité de points d'accès associés à une information relative à un accès à un service de distribution de contenus par l'intermédiaire desdits points d'accès, ladite liste étant ordonnée en fonction d'un critère relatif audit service, ledit critère appartenant au groupe comprenant un profil d'un utilisateur du terminal pour le service, un taux de charge d'un réseau de distribution de contenus accessible par l'intermédiaire d'un réseau d'accès, une occurrence d'un problème sur le réseau de distribution de contenus, lesdits points d'accès appartenant en outre respectivement à un réseau d'accès et prévus pour fournir une couverture radio d'une localisation courante dudit terminal ;
- des moyens de sélection dans ladite liste d'un point d'accès permettant d'accéder à un service recherché par ledit terminal.

## Patentansprüche

1. Verfahren zum Gewinnen von Informationen bezüglich einer Funkumgebung durch ein Endgerät (10), wobei das Verfahren die folgenden Schritte enthält:
- einen Schritt (E3) des Empfangs einer vom Endgerät kommenden Aufspüranforderung einer Funkumgebung durch eine Aufspürvorrichtung (24) ;
- einen Schritt (E4) der Bestimmung einer Liste durch die Aufspürvorrichtung, die eine Vielzahl von Zugangspunkten enthält, die je zu einem Zugangsnetz gehören und vorgesehen sind, eine Funkabdeckung eines aktuellen Standorts des Endgeräts zu liefern;
- einen Schritt (E4) des Gewinnens einer Information bezüglich eines Zugangs zu einem Inhaltsverteilungsdienst mittels der Zugangspunkte der Liste;
- einen Schritt (E5) der Vervollständigung der Liste durch die in Verbindung mit dem Zugangspunkt gewonnene Information;
- einen Schritt (E5) des Ordnens der vervollständigten Liste abhängig von mindestens einem Kriterium bezüglich des Diensts, wobei das Kriterium zu der Gruppe gehört, die ein Profil eines Benutzers des Endgeräts für den Dienst, ein Lastverhältnis eines mittels eines Zugangsnetzes zugänglichen Inhaltsverteilungsnetzes, ein Auftreten eines Problems im Inhaltsverteilungsnetz enthält;
- einen Schritt (E5) des Sendens der geordneten Liste an das Endgerät durch die Aufspürvorrichtung.

2. Gewinnungsverfahren nach Anspruch 1, das außerdem einen Schritt (G1) der Bestimmung einer Liste von Zugangsnetzen enthält, die den Zugang zum Dienst erlauben, wobei der Bestimmungsschritt vor dem Empfangsschritt durchgeführt wird.

3. Gewinnungsverfahren nach Anspruch 1, wobei die vom Endgerät übertragene Anforderung eine Information bezüglich des Diensts enthält.

4. Gewinnungsverfahren nach Anspruch 1, wobei, wenn der Dienst ein Inhaltsverteilungsdienst ist, wobei eine Vielzahl von Inhaltsverteilungsnetzen über den Zugangspunkt zugänglich ist, das Verfahren außerdem enthält:
- einen Schritt (G3) des Empfangs einer vom Endgerät kommenden Kennung eines Inhalts;
- einen Schritt (G4) der Auswahl eines Verteilungsnetzes aus der Vielzahl abhängig von der Inhaltskennung und der Umleitung des Endgeräts zum ausgewählten Verteilungsnetz.

5. Gewinnungsverfahren nach Anspruch 4, das vor dem Auswahlschritt eine Überprüfung bei einer authentifizierenden Instanz des Zugangsnetzes enthält, ob das Endgerät authentifiziert ist.

6. Gewinnungsverfahren nach Anspruch 1, wobei, wenn der Dienst ein Inhaltsverteilungsdienst ist, das Verfahren außerdem enthält:
- einen Schritt des Empfangs einer kontextuellen Information bezüglich eines Inhaltsverteilungsnetzes;
- einen Schritt der Aktualisierung der geordneten Liste abhängig von der kontextuellen Information;
- einen Schritt des Sendens der aktualisierten geordneten Liste an das Endgerät.

7. Vorrichtung (24) zum Aufspüren einer Funkumgebung, die eingerichtet ist, um Informationen bezüglich einer Funkumgebung an ein Endgerät (10) zu übertragen, wobei die Vorrichtung die folgenden Einrichtungen enthält:
- Einrichtungen (202) zum Empfang einer vom Endgerät kommenden Aufspüranforderung einer Funkumgebung;
- Einrichtungen (206) zur Bestimmung einer Liste, die eine Vielzahl von Zugangspunkten enthält, die je zu einem Zugangsnetz gehören und vorgesehen sind, eine Funkabdeckung eines aktuellen Standorts des Endgeräts zu liefern;
- Einrichtungen (204) zum Gewinnen einer Information bezüglich eines Zugangs zu einem Inhaltsverteilungsdienst mittels der Zugangspunkte der Liste;
- Einrichtungen (206) zur Vervollständigung der Liste durch die gewonnene Information in Verbindung mit dem Zugangspunkt;
- Einrichtungen (206) zum Ordnen der vervollständigten Liste abhängig von mindestens einem Kriterium bezüglich des Diensts, wobei das Kriterium zu der Gruppe gehört, die ein Profil eines Benutzers des Endgeräts für den Dienst, ein Lastverhältnis eines Inhaltsverteilungsnetzes, das mittels eines Zugangsnetzes zugänglich ist, ein Auftreten eines Problems im Inhaltsverteilungsnetz enthält;
- Einrichtungen (202) zum Senden der geordneten Liste an das Endgerät.

8. System zum Gewinnen von Informationen bezüglich einer Funkumgebung, das eine Aufspürvorrichtung nach Anspruch 7 und eine Vermittlungsinstanz enthält, wobei die Instanz enthält:
- Einrichtungen (300) zum Gewinnen von Informationen bezüglich eines Diensts ausgehend von Instanzen, die den Dienst durchführen;
- Kommunikationseinrichtungen (302), die eingerichtet sind, die Information bezüglich eines Zugangs zum Dienst mittels eines Zugangspunkts an die Aufspürvorrichtung zu liefern.

9. Endgerät, das eingerichtet ist, um Informationen bezüglich einer Funkumgebung zu gewinnen, wobei das Endgerät enthält:
- Einrichtungen zum Senden einer Aufspüranforderung der Funkumgebung an eine Aufspürvorrichtung;
- Einrichtungen zum Empfang einer Liste von der Aufspürvorrichtung, die eine Vielzahl von Zugangspunkten enthält, die einer Information bezüglich eines Zugangs zu einem Inhaltsverteilungsdienst mittels der Zugangspunkte enthält, wobei die Liste abhängig von einem Kriterium bezüglich des Diensts geordnet ist, wobei das Kriterium zu der Gruppe gehört, die ein Profil eines Benutzers des Endgeräts für den Dienst, ein Lastverhältnis eines mittels eines Zugangsnetzes zugänglichen Inhaltsverteilungsnetzes, ein Auftreten eines Problems im Inhaltsverteilungsnetz enthält, wobei die Zugangspunkte außerdem je zu einem Zugangsnetz gehören und vorgesehen sind, um eine Funkabdeckung eines aktuellen Standorts des Endgeräts zu liefern;
- Einrichtungen zur Auswahl eines Zugangspunkts in der Liste, der es ermöglicht, auf einen vom Endgerät gesuchten Dienst zuzugreifen.

## Claims

1. Method of obtaining by a terminal (10) of information relating to a radio environment, said method comprising the following steps:
- a step (E3) of reception by a discovery device (24) of a discovery request in respect of a radio environment originating from the terminal;
- a step (E4) of determination by the discovery device of a list comprising a plurality of access points, belonging respectively to an access network and being designed to provide radio coverage of a current location of the terminal;
- a step (E4) of obtaining an item of information relating to access to a contents distribution service by way of the access points of the list;
- a step (E5) of enriching the list with the item of information obtained in association with the access point;
- a step (E5) of ordering the enriched list as a function of at least one criterion relating to the service, said criterion belonging to the group comprising a profile of a user of the terminal in respect of the service, a degree of loading of a contents distribution network accessible by way of an access network, an occurrence of a problem on the contents distribution network;
- a step (E5) of dispatching by the discovery device of the ordered list to the terminal.

2. Obtaining method according to Claim 1, furthermore comprising a step (G1) of determining a list of access networks making it possible to access the service, said determining step being implemented prior to the reception step.

3. Obtaining method according to Claim 1, in which the request transmitted by the terminal comprises an item of information relating to the service.

4. Obtaining method according to claim 1, in which the service being a contents distribution service, a plurality of contents distribution networks being accessible by way of the access point, said method furthermore comprises:
- a step (G3) of receiving from the terminal an identifier of a content;
- a step (G4) of selecting a distribution network of said plurality as a function of the content identifier and of redirecting the terminal toward the selected distribution network.

5. Obtaining method according to Claim 4, comprising prior to the selection step, a verification via an authenticating entity of the access network that the terminal is authenticated.

6. Obtaining method according to Claim 1, in which the service being a contents distribution service, said method furthermore comprises:
- a step of receiving a contextual item of information relating to a contents distribution network;
- a step of updating the ordered list as a function of the contextual item of information;
- a step of dispatching the updated ordered list to the terminal.

7. Device (24) for discovery of a radio environment, arranged to transmit to a terminal (10) information relating to a radio environment, said device comprising the following means:
- means (202) for receiving a discovery request in respect of a radio environment originating from the terminal;
- means (206) for determining a list comprising a plurality of access points, belonging respectively to an access network and designed to provide radio coverage of a current location of the terminal;
- means (204) for obtaining an item of information relating to access to a contents distribution service by way of the access points of the list;
- means (206) for enriching the list with the item of information obtained in association with the access point;
- means (206) for ordering the enriched list as a function of at least one criterion relating to the service, said criterion belonging to the group comprising a profile of a user of the terminal in respect of the service, a degree of loading of a contents distribution network accessible by way of an access network, an occurrence of a problem on the contents distribution network;
- means (202) for dispatching the ordered list to the terminal.

8. System for obtaining information relating to a radio environment comprising a discovery device according to Claim 7 and a mediation entity, said entity comprising:
- means (300) for obtaining information relating to a service on the basis of entities implementing the service;
- communication means (302), arranged to provide the discovery device with the item of information relating to access to the service by way of an access point.

9. Terminal, arranged to obtain information relating to a radio environment, said terminal comprising:
- means for dispatching to a discovery device a discovery request in respect of said radio environment;
- means for receiving from said discovery device, a list comprising a plurality of access points associated with an item of information relating to access to a contents distribution service by way of said access points, said list being ordered as a function of a criterion relating to said service, said criterion belonging to the group comprising a profile of a user of the terminal for the service, a rate of loading of a contents distribution network accessible by way of an access network, an occurrence of a problem on the contents distribution network, said access points belonging moreover respectively to an access network and designed to provide radio coverage of a current location of said terminal;
- means for selecting from said list an access point making it possible to access a service sought by said terminal.
